# EUROPÄISCHE PATENTANMELDUNG

(11) **EP 0 867 387 A1**
(43) Veröffentlichungstag der Anmeldung: **30.09.1998**
(21) Anmeldenummer: 98105301.0
(22) Anmeldetag: 24.03.1998
(51) Int. Cl.: B65G 49/06

(54) **Verfahren und Vorrichtung zum Versetzen eines Gegenstandes**

(30) Priorität: 25.03.1997 DE 19712368
(71) Anmelder: Hager, Hans, 86751 Mönchsdeggingen (DE)
(72) Erfinder: Hager, Hans, 86751 Mönchsdeggingen (DE)
(74) Vertreter: Jannig, Peter

(57) **Zusammenfassung**

Es werden ein Verfahren und eine Vorrichtung zum Versetzen eines Gegenstandes (3) von einer ersten Stelle (2) zu einer zweiten Stelle (1) unter Verwendung eines den Gegenstand (3) während des Versetzens an sich bindenden Haltemechanismus (41) beschreiben. Das beschriebene Verfahren und die beschriebene Vorrichtung zeichnen sich dadurch aus, daß das Heranfahren des Haltemechanismus (41) an den zu versetzenden Gegenstand (3) oder an die erste (2) oder die zweite Stelle (1) unter Berücksichtigung der tatsächlichen Lage und/oder Ausrichtung derselben erfolgt, wobei der Haltemechanismus (41) bei Bedarf unter Ausnutzung einer freien Drehbarkeit und/oder Schwenkbarkeit desselben um eine oder mehrere Achsen ausgerichtet wird. Dadurch kann auf einfache Weise ein unter allen Umständen sicheres Versetzen von Gegenständen (3) durchgeführt werden.

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 6, d.h. ein Verfahren und eine Vorrichtung zum Versetzen eines Gegenstandes von einer ersten Stelle zu einer zweiten Stelle unter Verwendung eines den Gegenstand während des Versetzens an sich bindenden Haltemechanismus.

Derartige Verfahren und Vorrichtungen werden beispielsweise in der glaserzeugenden und/oder glasverarbeitenden Industrie benötigt. Die zu versetzenden Gegenstände sind dabei Glasscheiben.

Die Glasscheiben werden in der Regel in Glashütten (Floats) hergestellt und in davon mehr oder weniger weit entfernten glasverarbeitenden Betrieben individuell weiterverarbeitet.

Die besagten Glasscheiben weisen eine beträchtliche Größe auf, nämlich 6 m x 3,21 m (sogenanntes Bandmaß bzw. PLF) oder 3,21 m x 2 - 2,5 m (sogenanntes geteiltes Bandmaß bzw. DLF).

Zum Transport der Glasscheiben werden sogenannte Inlader-Gestelle verwendet. In diese Inlader-Gestelle, welche von der Seite betrachtet in der Regel einem "A" oder "L" ähneln und dementsprechend als Inlader-A-Gestelle oder Inlader-L-Gestelle bezeichnet werden, kann eine Vielzahl von Glasscheiben eingestellt werden; das Einstellen der Glasscheiben erfolgt dabei derart, daß sie einzeln oder (vorzugsweise zwischenraumfrei) aneinanderlehnend an im wesentlichen vertikalen Flächen oder Rahmen der Inlader-Gestelle lehnen.

Zum Be- und Entladen eines Inlader-Gestells wird dieses unmittelbar neben das Förderband gestellt, durch das die auf das Inlader-Gestell umzuladenden Glasscheiben herangefördert werden bzw. auf das die auf dem Inlader-Gestell befindlichen Glasscheiben umzuladen sind.

Das Umladen von Glasscheiben vom Inlader-Gestell auf das Förderband oder umgekehrt ist insbesondere wegen der enormen Größe der Glasscheiben und deren Zerbrechlichkeit eine relativ diffizile Angelegenheit; die Glasscheiben müssen von einem an diese herangefahrenen Haltemechanismus erfaßt (fest mit diesem in Verbindung gebracht) und in diesem Zustand zum Bestimmungsort versetzt werden.

Als Haltemechanismus, der die Glasplatten während des Versetzens an sich bindet, wird in der Regel ein sogenannter Saugerrahmen mit einer Vielzahl von darauf angebrachten Saugnäpfen verwendet. Die Saugnäpfe kommen beim Heranfahren des Saugerrahmens an die zu versetzende Glasscheibe mit dieser in Berührung und saugen sich schließlich daran fest, wodurch zwischen dem Saugerrahmen und der zu versetzenden Glasscheibe eine Verbindung entsteht, die so fest ist, daß die Glasscheibe bei einer Bewegung des Saugerrahmens von diesem mitgenommen wird.

Der Saugerrahmen ist Bestandteil eines sogenannten Untertischladers oder eines sogenannten Portalladers.

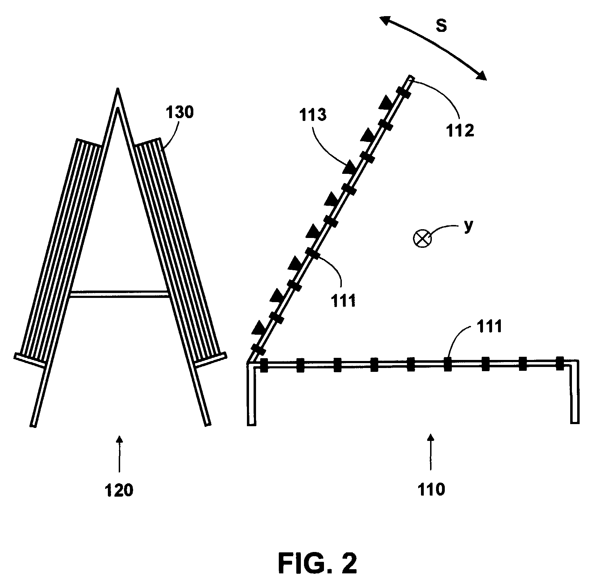

Der Untertischlader ist Bestandteil des vorstehend bereits erwähnten Förderbandes und wird nachfolgend unter Bezugnahme auf die Figur 2 näher erläutert.

Das den Untertischlader enthaltende Förderband ist in der Figur 2 mit dem Bezugszeichen 110 bezeichnet. Neben dem besagten Förderband 110 ist ein Inlader-A-Gestell 120 mit darin eingestellten Glasscheiben 130 abgestellt. Im betrachteten Beispiel gilt es, die auf dem Inlader-A-Gestell 120 befindlichen Glasscheiben 130 auf das Förderband 110 zu legen.

Das Förderband 110 weist eine Vielzahl von zumindest teilweise angetriebenen Rollen 111 auf; durch diese Rollen 111 wird eine auf das Förderband gelegte Scheibe 130 in eine Richtung y abtransportiert.

Das Förderband 110 weist einen beweglichen Abschnitt 112 auf, der wie in der Figur 2 durch einen Doppelpfeil S angedeutet schwenkbar ist. Der bewegliche Abschnitt 112 wirkt je nach seiner Stellung als Förderbandabschnitt (in der horizontal liegenden Stellung) oder als Saugerrahmen (in der mehr oder weniger weit hochgeschwenkten Stellung). Er ist daher sowohl mit Rollen 111 als auch mit Saugnäpfen 113 versehen. Die Saugnäpfe 113 sind versenkt, wenn und so lange der bewegliche Abschnitt 112 des Förderbandes 110 als Förderband wirkt; sie sind wie in der Figur 2 gezeigt ausgefahren, wenn und so lange der bewegliche Abschnitt 112 des Förderbandes 110 als Saugerrahmen wirkt.

In seiner Funktion als Saugerrahmen kann der bewegliche Abschnitt 112 die im Inlader-A-Gestell 120 befindlichen Glasscheiben 130 auf das Förderband 110 umladen. Wie vorstehend bereits angedeutet wurde, wird er hierzu aus seiner horizontal liegenden Ruheposition so weit geschwenkt bis dessen Saugnäpfe 113 in Anlage zu der auf das Förderband 110 zu befördernden (dorthin zu versetzenden) Glasscheibe 130 auf dem Inlader-A-Gestell 120 kommen. Wenn die Saugnäpfe 113 die Glasscheibe 130 erreicht haben, saugen sie sich an dieser derart fest, daß die Glasscheibe vom Saugerrahmen mitgenommen wird, wenn dieser wieder zurückgeschwenkt wird. Ist der bewegliche Abschnitt 112 des Förderbandes 110 in seine (horizontal liegende) Ausgangsposition zurückgeschwenkt, so wird das Ansaugen der Glasscheibe 130 durch die Saugnäpfe 113 beendet, und die Saugnäpfe werden nach unten versenkt. Dadurch kommt die Glasscheibe 130 auf den Rollen 111 zu liegen und wird durch deren Bewegung abtransportiert; der bewegliche Abschnitt 112 des Förderbandes 110 wirkt mithin wieder als Förderband.

Man spricht bei der vorstehend unter Bezugnahme auf die Figur 2 beschriebenen Anordnung von einem Untertischlader, weil der zum Bewegen des Saugerrahmens erforderliche (in der Figur 2 nicht gezeigte) Antriebsmechanismus unter dem Förderband 110 untergebracht ist.

Im Gegensatz hierzu ist der Antriebsmechanismus bei dem vorstehend bereits erwähnten Portallader oberhalb des Förderbandes angeordnet; darüber hinaus ist der Saugerrahmen nicht im Förderband integriert, sondern als separate Einheit ausgebildet.

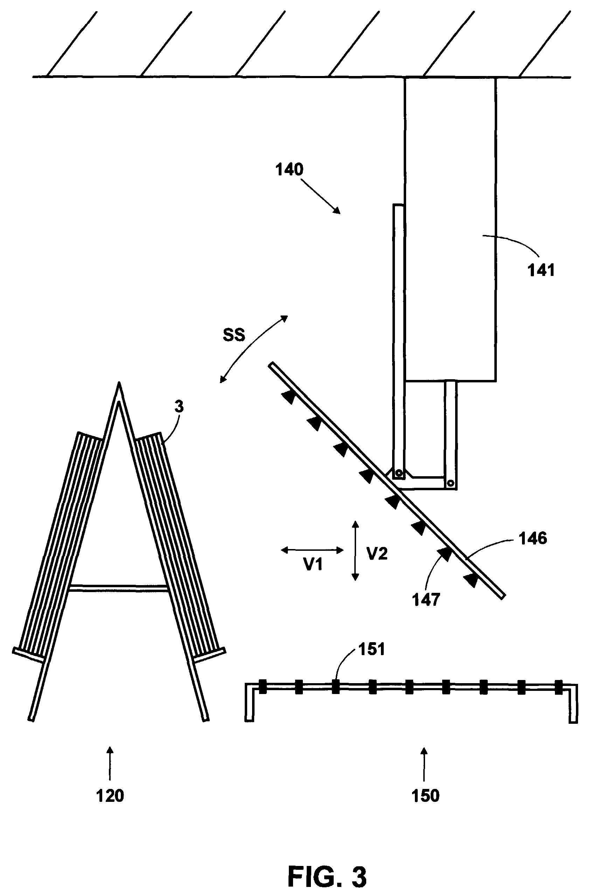

Ein solcher Portallader wird nachfolgend unter Bezugnahme auf Figur 3 beschrieben.

Der Portallader ist in der Figur 3 mit dem Bezugszeichen 140 bezeichnet. Durch den besagten Portallader 140 sollen im betrachteten Beispiel auf einem Inlader-A-Gestell 120 stehende Glasscheiben 130 auf ein Förderband 150 gelegt werden.

Das Inlader-A-Gestell 120 und die dort eingestellten Glasscheiben 130 entsprechen dem Inlader-A-Gestell und den Glasscheiben gemäß Figur 2; sie sind deshalb mit den gleichen Bezugszeichen bezeichnet.

Das Förderband 150 weist eine Vielzahl von angetriebenen Rollen 151 auf, durch welche eine darauf liegende Glasscheibe 130 befördert werden kann; das Förderband 150 hat ausschließlich Förderfunktion.

Der Portallader 140 ist im Bereich oberhalb des Förderbandes 150 und des Inlader-A-Gestells 120 an einer Brücke oder der Decke befestigt; er besteht aus einem Antriebsmechanismus 141 und einem Saugerrahmen 146.

Der Saugerrahmen 146 weist eine Vielzahl von Saugnäpfen 147 auf und ist mittels des Antriebsmechanismus die durch Doppelpfeile V1, V2 und SS angedeutet verschiebbar und schwenkbar.

Zum Versetzen einer Glasscheibe 130 vom Inlader-A-Gestell 120 auf das Förderband 150 wird der Saugerrahmen 146 unter Verschieben und/oder Schwenken desselben an die Glasscheibe 130 herangefahren. Wenn der Saugerrahmen 146 die Glasscheibe 130 erreicht hat, wird diese von den Saugnäpfen 147 angesaugt und beim Wegbewegen des Saugerrahmens 146 von diesem mitgenommen. Der Saugerrahmen 146 wird sodann so verschoben und/oder geschwenkt, daß die Glasscheibe 130 auf dem Förderband 150 zu liegen kommt. Ist dies geschehen, wird die Verbindung zwischen dem Saugerrahmen 146 und der Glasscheibe 130 gelöst, wodurch letztgenannte auf dem Förderband 150 abtransportiert werden kann.

Die vorstehend unter Bezugnahme auf die Figuren 2 und 3 beschriebenen Verfahren und Vorrichtungen zum Umladen von Glasscheiben sind Verfahren und Vorrichtungen gemäß den Oberbegriffen der Patentansprüche 1 und 6.

Sowohl beim Untertischlader gemäß Figur 2 als auch beim Portallader gemäß Figur 3 muß die jeweils zu versetzende Glasscheibe 130 vom Anfang bis zum Ende des Versetzens zuverlässig fest mit dem Saugerrahmen 112 bzw. 146 verbunden sein. Ist dies nicht der Fall, kann die zu versetzende Glasscheibe 130 während des Transports zu Bruch gehen.

Voraussetzung für das Zustandekommen einer ordnungsgemäßen Verbindung zwischen dem Saugerrahmen 112 bzw. 146 und der zu versetzenden Glasscheibe 130 ist eine vorbestimmte Relativlage zwischen der zu versetzenden Glasscheibe 130, dem Förderband 110 bzw. 150 und dem Saugerrahmen 112 bzw. 146. Dies ist insofern problematisch als die Inlader-Gestelle durch LKWs angeliefert und abtransportiert und durch Krans oder dergleichen neben dem Förderband abgestellt werden müssen.

Ein derartiges Abstellen der Inlader-Gestelle ist zeitaufwendig und/oder nicht ohne weiteres mit der erforderlichen Genauigkeit durchführbar. Insbesondere kann es vorkommen, daß das so abgesetzte Inlader-Gestell nicht parallel zum Förderband und/oder Saugerrahmen ausgerichtet ist.

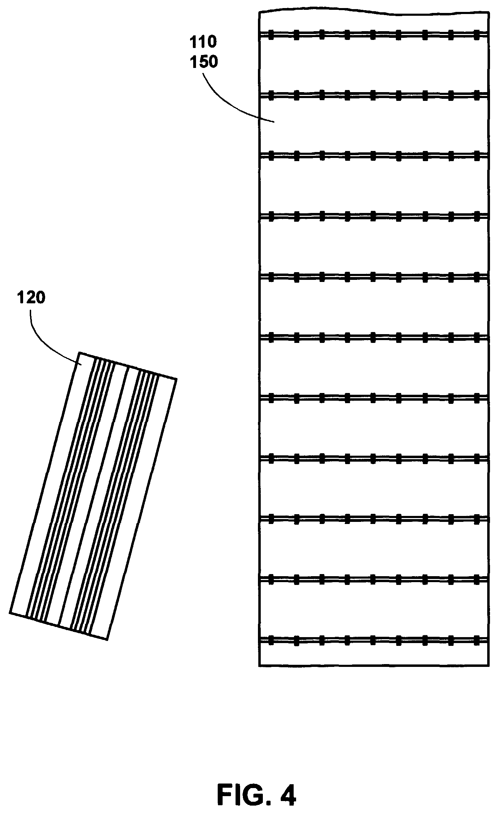

Eine solche Fehlausrichtung ist (stark schematisiert) in der Figur 4 veranschaulicht.

Wie aus der Figur 4 ersichtlich ist, stehen das dort gezeigte Inlader-A-Gestell 120 und das Förderband 110 bzw. 150 schräg zueinander. Die Folge einer derartigen Schrägstellung wäre, daß der Saugerrahmen beim Heranfahren an das Inlader-Gestell nur teilweise in Kontakt mit einer von dort mitzunehmenden Glasscheibe kommen kann. Die sich zwischen dem Saugerrahmen und der Glasscheibe einstellende Verbindung ist unzureichend, wodurch die Glasscheibe entweder überhaupt nicht wegbewegt werden kann oder dem Saugerrahmen entgleitet und zu Bruch geht.

Um dies zu verhindern, werden an den Stellen, an denen die Inlader-Gestelle abzustellen sind, sogenannte Ausrichtbühnen im Boden integriert. Diese Ausrichtbühnen sind in der Lage, darauf abgestellte Inlader-Gestelle parallel zum Förderband und/oder Saugerrahmen auszurichten.

Ausrichtbühnen schaffen zwar Abhilfe gegen die vorstehend genannten Probleme, doch haben deren Vorsehen, deren Wartung und deren Instandhaltung einen nicht unerheblichen technischen und finanziellen Aufwand zur Folge.

Der vorliegenden Erfindung liegt daher die Aufgabe zugrunde, das Verfahren gemäß dem Oberbegriff des Patentanspruchs 1 bzw. die Vorrichtung gemäß dem Oberbegriff des Patentanspruchs 6 derart weiterzubilden, daß auf einfache Weise ein unter allen Umständen sicheres Versetzen von Gegenständen durchgeführt werden kann.

Diese Aufgabe wird erfindungsgemäß durch die im kennzeichnenden Teil des Patentanspruchs 1 (Verfahren) bzw. durch die im kennzeichnenden Teil des Patentanspruchs 6 (Vorrichtung) beanspruchten Merkmale gelöst.

Demnach ist vorgesehen,
- daß das Heranfahren des Haltemechanismus an den zu versetzenden Gegenstand oder an die erste oder die zweite Stelle unter Berücksichtigung der tatsächlichen Lage und/oder Ausrichtung derselben erfolgt, wobei der Haltemechanismus bei Bedarf unter Ausnutzung einer freien Drehbarkeit und/oder Schwenkbarkeit desselben um eine oder mehrere Achsen ausgerichtet wird (kennzeichnender Teil des Patentanspruchs 1) bzw.
- daß Mittel zum Heranfahren des Haltemechanismus an den zu versetzenden Gegenstand oder an die erste oder die zweite Stelle unter Berücksichtigung der tatsächlichen Lage und/oder Ausrichtung derselben vorgesehen sind, wobei der Haltemechanismus bei Bedarf unter Ausnutzung einer freien Drehbarkeit und/oder Schwenkbarkeit desselben um eine oder mehrere Achsen ausrichtbar ist (kennzeichnender Teil des Patentanspruchs 6).

Erfindungsgemäß werden also nicht die zu versetzenden Gegenstände und/oder deren Bestimmungsort ausgerichtet, bis sie eine vorbestimmte Sollposition und/oder Solllage erreicht haben, sondern es wird unter Berücksichtigung der tatsächlichen Position und/oder Lage derselben der die zu versetzenden Gegenstände beim Versetzen mitnehmende Haltemechanismus entsprechend ausgerichtet.

Auf ein genau definiertes Abstellen von Einrichtungen zum Anund/oder Abtransport der Gegenstände (der Inlader-Gestelle, wenn Glasscheiben die zu versetzenden Gegenstände sind) oder auf ein lagemäßiges Justieren der bereits abgesetzten Einrichtungen durch Ausrichtbühnen oder dergleichen kann verzichtet werden.

Das Ausrichten des Haltemechanismus gestaltet sich überraschend einfach und störungsfrei, wenn - wie beansprucht - das Ausrichten unter Ausnutzung einer freien Drehbarkeit und/oder Schwenkbarkeit des Haltemechanismus erfolgt. Dann kann nämlich der Haltemechanismus wie bisher zunächst unabhängig von der tatsächlichen Position und Ausrichtung der zu versetzenden Gegenstände und/oder deren Bestimmungsorte an diese herangefahren werden, wobei jedoch mit dem Erreichen des zu versetzenden Gegenstandes oder des Bestimmungsortes durch den Haltemechanismus aufgrund der freien Dreh- und oder Schwenkbarkeit desselben (bei im wesentlichen unverändert fortgesetztem Heranfahren) automatisch ein Eindrehen oder Einschwenken des Haltemechanismus in eine zum zu versetzenden Gegenstand oder zum Bestimmungsort angestrebte Relativlage erfolgt.

Die angestrebte Relativlage kann erkennbar ohne vorherige rechnerische Ermittlung derselben und ohne Berechnung der zum Erreichen derselben durchzuführenden Bewegungen des Haltemechanismus erreicht werden. Es kann daher auf den Einsatz komplizierter Sensoren und aufwendiger Schaltungen zur Auswertung der Sensorsignale und Steuerung des Antriebsmechanismus verzichtet werden.

Bei Erreichen der angestrebten Relativlage kann ermittelt werden, ob und gegebenenfalls wieviel der Haltemechanismus bei dessen Ausrichtung gedreht und oder geschwenkt wurde. Wird der Haltemechanismus beim Versetzen weiterer Gegenstände um das dabei ermittelte Ausmaß gedreht und/oder geschwenkt an den jeweils zu versetzenden Gegenstand herangefahren, so kann auf eine erneute Ausrichtung des Haltemechanismus verzichtet werden.

Durch das erfindungsgemäße Verfahren und durch die erfindungsgemäße Vorrichtung kann mithin auf äußerst einfache Weise ein unter allen Umständen sicheres Versetzen von Gegenständen durchgeführt werden.

Die Erfindung wird nachfolgend anhand eines Ausführungsbeispiels unter Bezugnahme auf die Zeichnung näher erläutert. Es zeigen
- Figur 1: eine schematisch dargestellte Seitenansicht einer nach dem erfindungsgemäßen Verfahren betreibbaren, die erfindungsgemäße Vorrichtung enthaltenden Anlage,
- Figur 2: eine schematisch dargestellte Seitenansicht einer einen Untertischlader enthaltenden herkömmlichen Anlage,
- Figur 3: eine schematisch dargestellte Seitenansicht einer einen Portallader enthaltenden herkömmlichen Anlage, und
- Figur 4: eine schematisch dargestellte Draufsicht auf ein Förderband mit schräg dazu angeordnetem Inlader-Gestell.

Die Gegenstände, die es im nachfolgend näher beschriebenen Ausführungsbeispiel zu versetzen gilt, sind im wesentlichen plattenförmige Gegenstände in Form von Glasscheiben, welche das eingangs bereits erwähnte Bandmaß oder das geteilte Bandmaß aufweisen.

Es sei bereits an dieser Stelle darauf hingewiesen, daß hierauf keine Einschränkung besteht. Das erfindungsgemäße Verfahren und die erfindungsgemäße Vorrichtung sind grundsätzlich zum Versetzen beliebiger Gegenstände mit beliebiger Größe, Form, Beschaffenheit und Funktion einsetzbar.

Die Glasscheiben, die es im vorliegenden Ausführungsbeispiel zu versetzen gilt, sind von einem Inlader-Gestell auf ein Förderband oder umgekehrt zu versetzende Glasscheiben.

Auch hierauf besteht keine Einschränkung. Das erfindungsgemäße Verfahren und die erfindungsgemäße Vorrichtung sind grundsätzlich zum Versetzen von Gegenständen von einer beliebigen ersten Stelle zu einer beliebigen zweiten Stelle einsetzbar, wobei auch die Ist- und Sollausrichtung der Gegenstände an den besagten Stellen keinen Beschränkungen unterworfen sind.

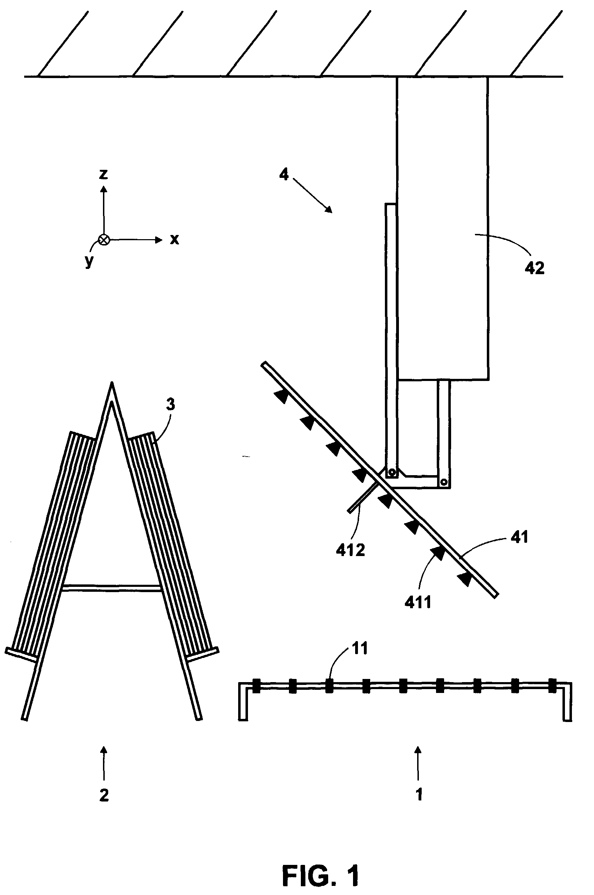

Die im folgenden näher beschriebene Anordnung zum wie erwähnten Versetzen von Glasscheiben ist schematisch in der Figur 1 veranschaulicht.

Die zu versetzenden Glasscheiben sind in der Figur 1 mit dem Bezugszeichen 3 bezeichnet. Es wird angenommen, daß die Glasscheiben 3 auf einem Inlader-Gestell 2 angeliefert wurden und von diesem durch einen Portallader 4 auf ein Förderband 1 umgesetzt werden sollen.

Das Förderband 1 entspricht dem Förderband 150 in Figur 3; es weist wie dieses eine Vielzahl von antreibbaren Rollen 11 auf, durch die eine darauf aufgelegte bzw. liegende Glasscheibe 3 an- oder abgefördert werden kann.

Das Inlader-Gestell 2 ist ein Inlader-A-Gestell und entspricht dem in den Figuren 2 und 3 gezeigten Inlader-A-Gestell 120; anstatt eines Inlader-A-Gestells kann selbstverständlich auch ein Inlader-L-Gestell oder ein sonstiges Gestell verwendet werden.

Im Inlader-Gestell 2 sind die auf das Förderband 1 umzusetzenden Glasscheiben 3 eingestellt; die Glasscheiben 3 lehnen dabei zwischenraumfrei aneinanderlehnend an einer im wesentlichen vertikalen Anlagefläche des Inlader-Gestells.

Der Portallader 4 ist an der Decke oder einer Brücke befestigt und umfaßt einen Haltemechanismus in Form eines Saugerrahmens 41 und einen Antriebsmechanismus 42, durch welchen der Saugerrahmen 41 allein oder zusammen mit dem Antriebsmechanismus 42 bewegbar ist.

Der Saugerrahmen 41 ist im betrachteten Beispiel ein flächenartige Ausdehnung aufweisender Saugerrahmen; anstatt eines solchen Flächen-Saugerrahmens kann auch ein linienartige Ausdehnung aufweisender Linien-Saugerrahmen verwendet werden. Unabhängig davon weist der verwendete Saugerrahmen eine Vielzahl von Saugnäpfen 411 auf, durch welche die jeweils zu versetzende Glasscheibe 3 während des Versetzens angesaugt wird. Der Saugerrahmen 41 weist ferner zwei Fühler 412 auf, deren Funktion und Wirkungsweise später noch genauer beschrieben wird.

Definiert man die x-, y- und z-Richtung wie in der Figur 1 durch entsprechend bezeichnete Pfeile veranschaulicht ist, so lassen sich die Bewegungsmöglichkeiten des Saugerrahmens 41 wie folgt angeben: er ist um die y-Achse dreh- bzw. schwenkbar, und zusammen mit zumindest Teilen des Antriebsmechanismus 42 in x-Richtung und in z-Richtung verschiebbar und um die z-Achse dreh- bzw. schwenkbar.

Unter x-Richtung, y-Richtung und z-Richtung sind hier und im folgenden nicht nur die durch die entsprechenden Pfeile angegebenen Richtungen, sondern auch die jeweils genau entgegengesetzten Richtungen zu verstehen.

Im Betrieb der Anordnung wird der Saugerrahmen 41 durch Verschieben und Drehen bzw. Schwenken desselben zur parallelen und zwischenraumfreien Anlage an die zu versetzende Glasscheibe 3 gebracht. Das Erreichen dieser Position wird durch die zumindest bezüglich der y-Richtung versetzt angeordneten Fühler 412 signalisiert, welche bei Annäherung des Saugerrahmens 41 an die Glasscheibe 3 aus ihrer aus dem Saugerrahmen 41 hervorstehenden Stellung unter Überwindung einer Federkraft in den Saugerrahmen 41 zurückgedrückt oder zu diesem hin zurückgeschwenkt werden. Wenn der Saugerrahmen 41 zur Anlage an die Glasscheibe 3 gekommen ist, wird die Glasscheibe durch die Saugnäpfe 411 angesaugt. Die sich dadurch zwischen der Glasscheibe 3 und dem Saugerrahmen 41 einstellende Verbindung ist so fest, daß die Glasscheibe 3 am Saugerrahmen 41 haftend vom Inlader-Gestell 2 wegbewegt werden kann. Der Saugerrahmen 41 wird dabei zusammen der daran haftenden Glasscheibe 3 so verschoben, gedreht und geschwenkt, daß die Glasscheibe 3 schließlich auf dem Förderband 1 zu liegen kommt. Die Glasscheibe 3 wird dann von den Saugnäpfen 411 losgelassen und durch das Förderband 1 abtransportiert. Im Anschluß daran wird die nächste Glasscheibe 3 vom Inlader-Gestell 2 herangeschafft, wobei die soeben beschriebenen Vorgänge erneut ablaufen.

Bei dem vorliegend betrachteten Beispiel ist es nicht erforderlich, daß das die zu versetzenden Glasscheiben 3 tragende Inlader-Gestell 2 parallel oder in sonstiger Weise zum Förderband 1 oder dem Saugerrahmen 41 ausgerichtet ist. Der Saugerrahmen 41 kann nämlich unabhängig von der Position und der Ausrichtung der zu versetzenden Glasscheiben 3 in parallele Anlage zu diesen gebracht werden kann.

Dies wird dadurch möglich, daß der Saugerrahmen 41 um die z-Achse drehbar bzw. schwenkbar ist. Als besonders einfach erweist es sich dabei, wenn bei der Annäherung an die zu versetzende Glasscheibe 3 (spätestens bei Erreichen derselben) oder dauerhaft für eine derart freie Drehbarkeit und/oder Schwenkbarkeit des Saugerrahmens 41 gesorgt wird, daß die Translationsbewegung desselben beim Heranfahren an die zu versetzende Glasscheibe 3 bei einem schrägen Auftreffen auf dieselbe in eine Rotations- oder Schwenkbewegung übergehen kann (und/oder umgekehrt).

Die sich bei einer derartigen Ausrichtung des Saugerrahmens 41 auf die zu versetzende Glasscheibe 3 einstellenden Vorgänge werden nachfolgend detailliert erläutert.

Die folgenden Erläuterungen gehen von einem Zustand aus, in dem sich der Saugerrahmen 41 in einer genau definierten Ausgangs- oder Neutralstellung befindet. In dieser Stellung ist der Saugerrahmen 41 so ausgerichtet, daß er, wenn das Inlader-Gestell 2 genau parallel zum Förderband 1 stünde, allein durch eine Bewegung in x-Richtung in eine parallele Anlage zur Glasscheibe 3 kommen könnte.

Ausgehend von dieser Ausgangsstellung wird der Saugerrahmen 41 durch Verschieben in x-Richtung an die zu versetzende Glasscheibe 3 herangefahren. Der Saugerrahmen 41 nähert sich dabei der Glasscheibe 3 und kommt schließlich mit dieser über zumindest einen der (in y-Richtung versetzten) Fühler 412 in Berührung. Der Fühler wird (bei fortgesetztem Heranfahren des Saugerrahmens 41 an die Glasplatte 3) in den Saugerrahmen 41 zurückgedrückt oder zu diesem hingeschwenkt.

Die Fühler 412 sind im betrachteten Beispiel so eingestellt, daß sie signalisieren, wenn sie soweit zurückgedrückt oder zurückgeschwenkt sind, wie es bei einem parallelen Anliegen des Saugerrahmens 41 an der zu versetzenden Glasscheibe 3 oder kurz vor Erreichen dieses Zustandes der Fall ist. Werden diese Signale von beiden Fühlern 412 abgegeben, so ist dies ein Zeichen dafür, daß der Saugerrahmen 41 mit der Glasscheibe 3 parallel an dieser anliegend in Kontakt gekommen ist oder ein derartiger Kontakt unmittelbar bevorsteht. Das Heranfahren des Saugerrahmens 41 an die zu versetzende Glasscheibe 3 wird im Ansprechen auf dieses Ereignis beendet.

Steht die zu versetzende Glasscheibe 3 genau parallel zur Saugerrahmen-Ausgangsstellung, so kommt der Saugerrahmen 41 ohne Drehung um die z-Achse parallel anliegend mit der Glasscheibe 3 in Kontakt. Steht die zu versetzende Glasscheibe 3 hingegen nicht parallel, also beispielsweise wie in der Figur 4 gezeigt schräg zum Förderband und zur Saugerrahmen-Ausgangsstellung, so kommt der Saugerrahmen 41 zunächst nur an einer seiner seitlichen Endabschnitte mit der Glasscheibe 3 in Kontakt.

Da in diesem Zustand höchstens einer der Fühler 412 einen Kontakt mit der zu versetzenden Glasscheibe 3 signalisiert, wird das Heranfahren des Saugerrahmens 41 an die Glasscheibe 3 fortgesetzt. Dem fortgesetzten Heranfahren des Saugerrahmens 41 in x-Richtung wirkt jedoch die Glasscheibe 3 entgegen, denn diese steht ja teilweise schon in Kontakt mit dem Saugerrahmen 41 und kann auch nicht von diesem weggedrückt werden. Die Folge hiervon ist, daß die Translationsbewegung des Saugerrahmens 41 in x-Richtung in eine Rotations- oder Schwenkbewegung um die z-Achse transformiert wird, wodurch derjenige Teil des Saugerrahmens 41, der noch nicht in Kontakt mit der Glasplatte 3 steht, an die Glasplatte 3 herangeschwenkt wird.

Eine derartige Schwenkbewegung des Saugerrahmens 41 ist möglich, weil dieser bzw. der Antriebsmechanismus spätestens bei Erreichen der Glasscheibe 3 oder schon vorher um die z-Achse frei drehbar bzw. schwenkbar, d.h. durch Krafteinwirkung von außen drehbar bzw. schwenkbar geschaltet wurde oder von Haus aus so drehbar oder schwenkbar ausgebildet ist.

Im betrachteten Beispiel muß eine aktive Freigabe einer solchen Dreh- und Schwenkbarkeit erfolgen, was auf unterschiedliche Art und Weise geschehen kann und vorliegend durch eine mechanische Trennung des Saugerrahmens 41 von einer diesen um die z-Achse drehen könnenden Antriebsquelle (mechanische Entkopplung oder Auskupplung) vorgenommen wird.

Die Freischaltung kann jedoch auch auf beliebige andere Art und Weise erfolgen und hängt unter anderem davon ab, ob und gegebenenfalls welche Art von Antriebsquelle vorgesehen ist, um den Portallader 4 um die z-Achse zu drehen oder zu schwenken. Handelt es sich bei der Antriebsquelle um einen Elektromotor, so könnte die Freigabe der Drehung um die z-Achse unter Umständen auch schon durch einen eingangsseitigen Leerlauf des Elektromotors erreicht werden.

Ist überhaupt keine Antriebsquelle zum Drehen des Portalladers 4 um die z-Achse vorgesehen, so genügt das Lösen einer Bremse, sofern eine solche überhaupt vorhanden ist.

Das Heranschwenken des Saugerrahmens 41 an die Glasscheibe 3 führt über kurz oder lang dazu, daß der Saugerrahmen 41 parallel an der Glasscheibe 3 anliegt. Dies wird durch die Fühler 412 signalisiert und zum Anlaß genommen, den Antrieb des Saugerrahmens 41 in x-Richtung zu beenden.

Die Glasscheibe 3 kann jetzt durch die Saugnäpfe 411 angesaugt werden und zusammen mit dem Saugerrahmen 41 vom Inlader-Gestell 2 zum Förderband 1 befördert werden.

Soll danach eine nächste Glasscheibe 3 versetzt werden, so können sich die vorstehend beschriebenen Vorgänge wiederholen.

Alternativ kann vorgesehen werden, daß die vorstehend beschriebene Ausrichtung des Saugerrahmens 41 nur beim Versetzen der jeweils ersten der auf einem Inlader-Gestell 2 befindlichen Glasscheiben 3 durchgeführt wird, und daß bei den nachfolgenden Glasscheiben-Holvorgängen der Saugerrahmen 41 die Glasscheiben 3 von Haus aus schon richtig um die z-Achse gedreht anfährt.

Daß nach der ersten Glasscheibe 3 geholte Glasscheiben von Haus aus richtig angefahren werden können, wird im betrachteten Beispiel durch einen (in der Figur 1 nicht gezeigten) Drehwinkelgeber ermöglicht. Wird nämlich dann, wenn bei der ersten der von einem jeweiligen Inlader-Gestell 2 abzuladenden Glasscheiben 3 der Saugerrahmen 41 parallel an dieser anliegt, also die bestimmungsgemäße Ausrichtung zwischen der Glasscheibe 3 und dem Saugerrahmen 41 erreicht ist, der Winkel ermittelt, um den der Portallader 4 gegenüber der anfänglichen definierten Ausgangsstellung um die z-Achse gedreht wurde, so kann der Saugerrahmen 41 beim Holen der restlichen Glasscheiben von dem betreffenden Inlader-Gestell 2 gleich von vornherein um genau diesen Winkel gedreht werden. Die Folge hiervon ist, daß nach dem Versetzen der jeweils ersten Glasscheibe 3 eines jeweiligen Inlader-Gestells 2 keine wie vorstehend beschriebene Ausrichtung des Saugerrahmens 41 auf die zu versetzenden Glasscheiben mehr erforderlich ist.

Verfügt der Portallader 4 über keinen Antrieb, um ihn um die z-Achse zu drehen, so kann vorgesehen werden, die Drehbarkeit des Portalladers um die z-Achse durch Betätigung eines Brems- oder Verriegelungsmechanismus bis zum vollständigen Entladen des betreffenden Inlader-Gestells 2 zu unterbinden, wenn der Saugerrahmen 41 den parallel anliegenden Zustand an der ersten der Glasscheiben 3 eines jeweiligen Inlader-Gestells 2 erreicht hat.

Obgleich der Saugerrahmen mit der voreingestellten Verdrehung um die z-Achse ohne eine nochmalige Ausrichtung normalerweise genau parallel mit den zu versetzenden Glasscheiben in Kontakt kommt, kann vorgesehen werden, auch hier noch eine Drehung um die z-Achse zuzulassen. Dadurch kann sichergestellt werden, daß der Saugerrahmen bei jeder zu versetzenden Glasscheibe 3 optimal mit dieser in Kontakt kommt.

Wie aus den vorstehenden Erläuterungen ersichtlich ist, muß ein zu entladendes Inlader-Gestell bei Verwendung des beschriebenen Verfahrens und/oder der beschriebenen Vorrichtung nicht mehr genau parallel zum Portallader abgestellt werden. Eine gegebenenfalls vorhandene Schrägstellung kann durch eine entsprechende Ausrichtung des Saugerrahmens ausgeglichen werden.

Entsprechendes gilt für leere Inlader-Gestelle, die mit durch das Förderband herangeförderten Glasscheiben zu beladen sind. Auch hier können bei Verwendung des erfindungsgemäßen Verfahrens und/oder der erfindungsgemäßen Vorrichtung Schrägstellungen des Inlader-Gestells ausgeglichen werden. Im Unterschied zum Entladen des Inlader-Gestells wird das Beladen jedoch vorzugsweise mit einer glasscheibenlosen Testfahrt begonnen, um die Ausrichtung des Inlader-Gestells zu ermitteln. Würde die Testfahrt bereits mit einer vom Förderband aufgenommenen und im Inlader-Gestell abzustellenden Glasscheibe durchgeführt werden, so ließe sich das bestimmungsgemäß ausgerichtete Anschlagen des Saugerrahmens am Inlader-Gestell nur unter Inkaufnahme eines zusätzlichen Aufwandes erfassen, denn die Fühler 412 wären dann ja wegen der darüberliegenden Glasscheibe nicht verwendbar. Bei der Testfahrt muß ferner darauf geachtet werden, daß die Fühler 412 bei der Ankunft des Saugerrahmens am Inlader-Gestell auch mit dem Inlader-Gestell in Kontakt kommen und nicht etwa ins Leere fahren. Um dies unter allen Umständen gewährleisten zu können, kann vorgesehen werden, die Fühler in einer oder mehreren Richtungen verschiebbar zu machen.

Durch die beim beschriebenen Portallader gegebene Möglichkeit, diesen aktiv um die z-Achse zu drehen, können die zu versetzenden Glasscheiben von beiden Seiten des Förderbandes geholt und/oder auf beiden Seiten des Förderbandes abgestellt werden, wobei das Be- und Entladen von auf der einen Seite des Förderbandes abgestellten Inlader-Gestellen in allen Einzelheiten exakt wie das Be- und Entladen von auf der anderen Seite des Förderbandes abgestellten Inlader-Gestellen erfolgen kann. Dadurch kann bei denkbar einfacher Konstruktion des Portalladers ein im wesentlichen unterbrechungsfreies Auflegen bzw. Abnehmen von Glasscheiben auf das bzw. vom Förderband erfolgen.

Die vorstehend beschriebene Anordnung kann - insbesondere in Abhängigkeit von den jeweiligen Einsatzbedingungen - in mehrerlei Hinsicht abgewandelt werden.

So ist es beispielsweise nicht erforderlich, das Versetzen des zu versetzenden Gegenstandes unter Verwendung eines Portalladers durchzuführen. Das beschriebene Verfahren kann auch bei einem entsprechend aufgebauten Untertischlader zum Einsatz kommen.

Es besteht auch keine Einschränkung darauf, daß die beschriebene freie Drehbarkeit und/oder Schwenkbarkeit des Saugerrahmens nur um die z-Achse vorgesehen wird. Je nach den individuellen Erfordernissen kann alternativ oder zusätzlich auch für eine freie Drehbarkeit und/oder Schwenkbarkeit des Saugerrahmens um beliebige andere Achsen gesorgt werden.

Darüber hinaus ist es auch nicht erforderlich, daß der den zu versetzenden Gegenstand während des Versetzens an sich bindende Haltemechanismus ein Saugerrahmen ist. Die Verbindung zwischen dem Haltemechanismus und dem zu versetzenden Gegenstand wird vorzugsweise insbesondere von der Größe, dem Gewicht, der Form, den Materialeigenschaften etc. des zu versetzenden Gegenstandes abhängig gemacht und kann beispielsweise auch durch Greifer oder beliebige andere Vorrichtungen erfolgen.

Anstatt der in den Haltemechanismus zurückdrückbaren oder zu diesem hin schwenkbaren Fühler können auch beliebige andere Erfassungseinrichtungen verwendet werden, die in der Lage sind, das Erreichen der bestimmungsgemäßen Relativlage des Haltemechanismus zum zu versetzenden Gegenstand oder dessen Abnahme- oder Bestimmungsort zu signalisieren oder ermitteln zu lassen.

Ähnliches gilt für den Drehwinkelgeber zur Erfassung einer gegebenenfalls erfolgten Drehung des Portalladers um die z-Achse während des wie beschrieben erfolgenden Ausrichtens des Haltemechanismus. Der Drehwinkelgeber kann durch eine beliebige andere Erfassungseinrichtung ersetzt werden, die in der Lage ist, Informationen zu liefern, deren Verwendung oder Auswertung es ermöglichen, die zu erfassende Drehung bei nachfolgenden Gegenstands-Versetzungen von Haus aus einzustellen.

Je nach der Geschwindigkeit, mit welcher der Haltemechanismus an den zu versetzenden Gegenstand herangefahren wird, kann es sich auch als vorteilhaft erweisen, die Geschwindigkeit mehr oder weniger lang vor dem Zusammentreffen von Haltemechanismus und zu versetzendem Gegenstand zu reduzieren.

Zusammenfassend kann festgestellt werden, daß durch das beschriebene Verfahren und die beschriebene Vorrichtung auf äußerst einfache Weise ein unter allen Umständen sicheres Versetzen von Gegenständen durchgeführt werden kann.

### Bezugszeichenliste

- 1: Förderband
- 2: Inlader-Gestell
- 3: Glasscheibe
- 4: Portallader
- 11: Rolle
- 41: Saugerrahmen
- 42: Antriebsmechanismus
- 110: Förderband
- 111: Rolle
- 112: beweglicher Abschnitt
- 113: Saugnapf
- 120: Inlader-A-Gestell
- 130: Glasscheibe
- 140: Portallader
- 141: Antriebsmechanismus
- 146: Saugerrahmen
- 147: Saugnapf
- 150: Förderband
- 151: Rolle
- 411: Saugnapf
- 412: Fühler

## Patentansprüche

1. Verfahren zum Versetzen eines Gegenstandes (3) von einer ersten Stelle (2) zu einer zweiten Stelle (1) unter Verwendung eines den Gegenstand während des Versetzens an sich bindenden Haltemechanismus (41),
**dadurch gekennzeichnet,**
daß das Heranfahren des Haltemechanismus an den zu versetzenden Gegenstand oder an die erste oder die zweite Stelle unter Berücksichtigung der tatsächlichen Lage und/oder Ausrichtung derselben erfolgt, wobei der Haltemechanismus bei Bedarf unter Ausnutzung einer freien Drehbarkeit und/oder Schwenkbarkeit desselben um eine oder mehrere Achsen ausgerichtet wird.

2. Verfahren nach Anspruch 1,
**dadurch gekennzeichnet,**
daß für eine derart freie Drehbarkeit und/oder Schwenkbarkeit des Haltemechanismus (41) gesorgt wird, daß eine Translationsbewegung des Haltemechanismus beim Heranfahren an den zu versetzenden Gegenstand (3) oder an die erste oder die zweite Stelle (1, 2) beim Auftreffen auf einen Gegenstand in eine Rotations- und/oder Schwenkbewegung des Haltemechanismus übergehen kann.

3. Verfahren nach Anspruch 1 oder 2,
**dadurch gekennzeichnet,**
daß die freie Drehbarkeit und/oder Schwenkbarkeit des Haltemechanismus (41) durch eine mechanische Entkopplung des Haltemechanismus und eines den Haltemechanismus um die betreffende Achse drehen oder schwenken könnenden Antriebsmechanismus (42) erzielt wird.

4. Verfahren nach einem der vorhergehenden Ansprüche,
**dadurch gekennzeichnet,**
daß beim Erreichen der bestimmungsgemäßen Relativlage des Haltemechanismus (41) zum zu versetzenden Gegenstand (3) oder zur ersten Stelle (2) oder zur zweiten Stelle (1) qualitativ und/oder quantitativ das Ausmaß der erfolgten Dreh- und/oder Schwenkbewegung des Haltemechanismus ermittelt wird.

5. Verfahren nach einem der vorhergehenden Ansprüche,
**dadurch gekennzeichnet,**
daß vor, während oder nach dem Heranfahren des Haltemechanismus (41) an den zu versetzenden Gegenstand (3) oder zur ersten Stelle (1) oder zur zweiten Stelle (2) eine Dreh- und/oder Schwenkbewegung des Haltemechanismus durchgeführt wird, deren Ausmaß beim Versetzen eines zuvor versetzten Gegenstandes ermittelt wurde.

6. Vorrichtung zum Versetzen eines Gegenstandes (3) von einer ersten Stelle (2) zu einer zweiten Stelle (1) unter Verwendung eines den Gegenstand während des Versetzens an sich bindenden Haltemechanismus (41),
**gekennzeichnet durch**
Mittel (42) zum Heranfahren des Haltemechanismus an den zu versetzenden Gegenstand oder an die erste oder die zweite Stelle unter Berücksichtigung der tatsächlichen Lage und/oder Ausrichtung derselben, wobei der Haltemechanismus bei Bedarf unter Ausnutzung einer freien Drehbarkeit und/oder Schwenkbarkeit desselben um eine oder mehrere Achsen ausrichtbar ist.

7. Vorrichtung nach Anspruch 6,
**dadurch gekennzeichnet,**
daß der zu versetzende Gegenstand (3) eine Glasscheibe, die erste Stelle (2) ein Inlader-Gestell, die zweite Stelle (1) ein Förderband, und der Haltemechanismus (41) ein Saugerrahmen ist.

8. Vorrichtung nach Anspruch 6 oder 7,
**dadurch gekennzeichnet,**
daß der Haltemechanismus (41) mit Signalisierungseinrichtungen (412) versehen ist, welche signalisieren, wenn der Haltemechanismus seine bestimmungsgemäße Relativlage zum zu versetzenden Gegenstand (3) oder zur ersten oder zweiten Stelle (1, 2) erreicht hat.

9. Vorrichtung nach einem der Ansprüche 6 bis 8,
**dadurch gekennzeichnet,**
daß eine Entkopplungseinrichtung vorgesehen ist, durch welche der Haltemechanismus (41) und der Antriebsmechanismus (42) zum Drehen oder Schwenken des Haltemechanismus entkoppelbar sind.

10. Vorrichtung nach einem der Ansprüche 6 bis 9,
**dadurch gekennzeichnet,**
daß eine Erfassungseinrichtung vorgesehen ist, durch welche die Verdrehung und/oder die Verschwenkung des Haltemechanismus (41) während dessen Ausrichtung zum zu versetzenden Gegenstand (3) oder zur ersten oder zweiten Stelle (1, 2) qualitativ und/oder quantitativ erfaßbar ist.

11. Vorrichtung nach einem der Ansprüche 6 bis 10,
**dadurch gekennzeichnet,**
daß eine Steuereinrichtung vorgesehen ist, auf deren Veranlassung hin der Haltemechanismus (41) vor, während oder nach dem Heranfahren desselben an den zu versetzenden Gegenstand (3) oder an die erste oder die zweite Stelle (1, 2) um ein zuvor ermitteltes Ausmaß drehbar oder schwenkbar ist.
